# EUROPÄISCHE PATENTSCHRIFT

(11) **EP 2 277 159 B1**
(45) Veröffentlichungstag und Bekanntmachung des Hinweises auf die Patenterteilung: **07.10.2015**
(21) Anmeldenummer: 09734407.1
(22) Anmeldetag: 27.04.2009
(51) Int. Cl.: G09B 29/00

(54) **GOLFPLATZFÜHRER**
GOLF-COURSE GUIDE
GUIDE DES TERRAINS DE GOLF

(30) Priorität: 26.04.2008 CH 663082008
(43) Veröffentlichungstag der Anmeldung: 26.01.2011
(73) Patentinhaber: Ulrich, Franz, 8832 Wilen b. Wollerau (CH); Projahn, Dirk, 8049 Zürich (CH)
(72) Erfinder: Ulrich, Franz, 8832 Wilen b. Wollerau (CH); Projahn, Dirk, 8049 Zürich (CH)
(74) Vertreter: Luchs, Willi
(86) Internationale Anmeldenummer: PCT/EP2009/003046
(87) Internationale Veröffentlichungsnummer: WO 2009/130054

(56) Entgegenhaltungen:
- GB-A- 2 162 985
- US-A- 1 541 008
- US-A- 3 949 987
- US-A- 4 505 478
- US-A- 4 666 157
- "filmomatt technische Information"[Online] Dezember 2007 (2007-12), Seiten 1-2, XP002541292 Gefunden im Internet: URL:http://www.neschen.com/data/pool/d6977 51370.pdf> [gefunden am 2009-08-13]
- Taladon: "Orthophoto", , 1 May 2007 (2007-05-01), pages 1-2, Retrieved from the Internet: URL:http://en.wikipedia.org/w/index.php?ti tle=Orthophoto&oldid=127461897 [retrieved on 2012-08-01]

## Beschreibung

Die Erfindung betrifft einen Golfplatzführer gemäss Anspruch 1.

Es ist bekannt und üblich, den Golfspielern Golfplatzführer in Form von handlichen Broschüren oder Büchlein mit Informationsplänen der einzelnen Spielbahnen zur Verfügung zu stellen, damit sie sich vor und während des Spiels über die Eigenheiten der jeweiligen Spielbahnen und vor allem über Distanzen orientieren können. Die Reproduktionsgrösse der einzelnen Informationspläne ist durch die jeweilige Dimension der Spielbahn bestimmt, wobei das zur Verfügung stehende Format möglichst ausgenutzt wird.

Die in diesen Plänen fest eingetragenen Angaben umfassen in den bekannten Golfplatzführer-Ausgestaltungen z.B. die Spielbahnlängen, gemessen an den verschiedenen Abschlägen, Distanzen bis Bunkeranfang und Bunkerende und anderen Hindernissen, sowie Distanzen bis Anfang und/oder Mitte und allenfalls auch bis Ende Green, ferner auch Gefälle-Richtungen. Der Nachteil dieser Golfplatzführer besteht darin, dass sich aktuelle Ballpositionen bzw. Distanzen anhand von diesen Plänen in der Regel nur sehr beschränkt oder nur umständlich durch Additionen oder Subtraktionen und proportionalen Schätzungen ermitteln lassen.

In der Druckschrift US-A-4,505,478 ist ein mehrseitiges Büchlein erläutert, bei welchem jedes der Blätter eine Darstellung wenigstens einer Bahn mit einem Golfloch enthält. Die Blätter bestehen vorteilhaft aus einem feuchtigkeitsbeständigen leichten Material, zum Beispiel aus Plastik. Auf diesen Blättern sind zu diesen Darstellungen visualisierte Messskalen überlagert. Diese Messskalen sind eindeutig zusätzlich auf diesen die photographische Darstellung der einzelnen Bahnen mit den jeweiligen Löchern enthaltenden Blättern aufgedruckt. Diese Messskalen sind als kreisförmige Hell- bzw. Dunkelbänder veranschaulicht und gehen konzentrisch vom Green aus. Diese Darstellungen sind aus photographischen Aufnahmen erstellt und können graphisch verstärkt sein, trotzdem sind solche Aufnahmen zu ungenau.

Bei dem Dokument US-A-1,541,008 handelt es sich um eine Strickware, in der ein elastisches Element(e) zwischen die Maschen einschiebbar ist. Diesem elastischen Element kommt aber eine andere Funktion zu.

In der Druckschrift US-A-3,949,987 ist eine Golfhilfe erläutert, bei der auf einem ersten Blatt eine Bahn mit einem Loch bzw. einem Punkt und eine Anzahl von kreisförmigen Linien wiederum in konzentrischer Anordnung zum Green bzw. zum Punkt aufgezeichnet sind. Zudem ist ein zweites Blatt aus einem transparenten Material mit ebenfalls einer Anzahl von kreisförmigen Linien vorgesehen, welche konzentrisch zu einem Punkt am Rand dieses Blattes ausgerichtet sind. Auch bei diesen Messhilfsmittel fehlt die erforderliche. Genauigkeit.

In der Druckschrift US-A-4,666,157 ist ein Golfplatz-Spielbuch geoffenbart, bei welchem die einzelnen Bahnen auf jeweils einem Blatt aufgezeichnet sind, für welche einzelne transparente Blätter mit Gitternetzlinien und zudem unterschiedliche Gitternetz-Systeme mit unterschiedlichen Skalen für die verschiedenen Bahnen verwendet werden. Es sind aber nicht für die gleichen Pars gleiche Massstäbe bei den Informationsplänen vorgesehen.

Seit einigen Jahren sind auch handgehaltene Computer sowie an den motorisierten Golfwagen (Golfcarts) fix montierte Computersysteme auf dem Markt erhältlich, welche mittels Satellitennavigation die aktuelle Ball- oder Golfwagenposition ermitteln. Diese wird auf digitalen Spielbahnplänen visuell dargestellt, und dem Spieler werden weitere Informationen wie z.B. Distanzen bis zum Greenanfang oder Greenmitte, zum Hindernis etc. geliefert. Ausserdem hat der Spieler bei einigen Systemen die Möglichkeit, seine Ergebnisse abzuspeichern.

Es ist dabei von Nachteil, dass die Bedienung solcher Computer aufwändig und relativ kompliziert ist, es dadurch zu Verzögerungen des Spielverlaufs führen kann, was insbesondere dann als unangenehm und störend empfunden wird, wenn mehrere Mitspieler (Flightpartner) unterwegs sind und überdies, wenn die Flights in kurzen zeitlichen Abständen nacheinander folgen.

Die vor allem in den USA bereits weit verbreiteten, fix auf den Golfwagen montierten Computersysteme haben zudem den Nachteil, dass der sich auf der Spielbahn bewegende Spieler sich den Informationszugang nicht zu jedem Zeitpunkt oder an jedem Ort verschaffen kann, sondern nur direkt am Golfwagen. Nach Spielende können die Informationen vom Spieler nicht ohne weiteres einfach mitgenommen werden. Bestenfalls können die Ergebnisse im Clubhaus ausgedruckt werden, was umständlich ist.

Ein weiterer Nachteil dieser Systeme ist, dass vielfach nur die Distanz zum Green direkt angezeigt wird. Taktische Analysen beispielsweise zur Aufteilung der noch zu überwindenden Strecke in Teilstücke, die man mit bestimmten Schlägern spielen kann, sind auf einfache Weise kaum möglich.

Der vorliegenden Erfindung liegt die Aufgabe zugrunde, einen einfach zu handhabenden und kostengünstigen Golfplatzführer zu schaffen, der sämtliche für das Golfspiel notwendigen Distanz- und Zusatzinformationen in ausreichender Genauigkeit liefert und eine einfache Spielstrategiefindung ermöglicht, ohne Einsatz von Elektronik.

Diese Aufgabe wird erfindungsgemäss durch einen Golfplatzführer mit den Merkmalen des Anspruches 1 gelöst.

Weitere bevorzugte Ausgestaltungen des erfindungsgemässen Golfplatzführers bilden den Gegenstand der abhängigen Ansprüche.

Der erfindungsgemässe Golfplatzführer umfasst Informationspläne der einzelnen Spielbahnen, wobei jeder Informationsplan der jeweiligen, in einem Massstab dargestellten Spielbahn detaillierte Golfplatzmerkmale aufzeigt, die als Orientierungshilfe zur optischen Positionsbestimmung dienen. Die Informationspläne sind als Orthofotos, d.h. masshaltige Luftbilder ausgeführt. Ferner enthält der Golfplatzführer erfindungsgemäss ein Messhilfsmittel mit einer dem Massstab des Informationsplanes entsprechenden Distanzskala, zum Ermitteln aller für den Golfspieler relevanten Distanzen.

Das Messhilfsmittel weist mehrere, dem unterschiedlichen Massstab mehrerer Informationspläne entsprechende Distanzskalen auf.

Das Messhilfsmittel ist als eine transparente Folie oder Kunststoffkarte ausgebildet. Auf der Kunststoffkarte sind mehrere Kreissektoren mit Distanzringausschnitten dargestellt, die die einzelnen Distanzskalen bilden. Mit dem Messhilfsmittel lassen sich ab der jeweiligen aktuellen Ballposition auf einfachste Weise und auf einen Blick alle für den Spieler relevanten Distanzen z.B. zu den Hindernissen und dem Green messen und die optimale Taktik für den nächsten Schlag bestimmen.

Der erfindungsgemässe Golfplatzführer ist einfach und kostengünstig. Es handelt sich um ein reines Druckerzeugnis, das kostengünstig reproduzierbar ist, mit einem darauf abgestimmten, einfachen Messhilfsmittel-es sind keine teuere und für das Gros der Golfspieler zu komplizierte elektronische Hilfsmittel notwendig.

Das Golfspiel kann ohne Verzögerungen verlaufen, und zusätzlich können auf einfache Art und Weise taktische Analysen bspw. zur Aufteilung der noch zu überwindenden Strecke in Teilstücke, die man mit bestimmten Schlägern spielen kann, durchgeführt werden, was bei der Verwendung bekannter Computersysteme kaum möglich ist.

Die Erfindung wird nachfolgend anhand der Zeichnung näher erläutert. Es zeigen:
- Fig. 1: ein Ausführungsbeispiel eines Informationsplanes einer Spielbahn, der einen Teil eines erfindungsgemässen Golfplatzführers bildet;
- Fig. 2: ein Ausführungsbeispiel eines Messhilfsmittels, das zum erfindungsgemässen Golfplatzführer gehört,
- Fig.3: eine Variante eines Messhilfsmittels, welchem zwei Distanzskalen für Par 4 und Par 5 zugeordnet sind, und
- Fig. 4a bis Fig. 4c: den Informationsplan nach Fig. 1 mit 3 verschiedenen Positionen mit jeweils dem Informationsplan und dem darauf gelegten Messhilfsmittel.

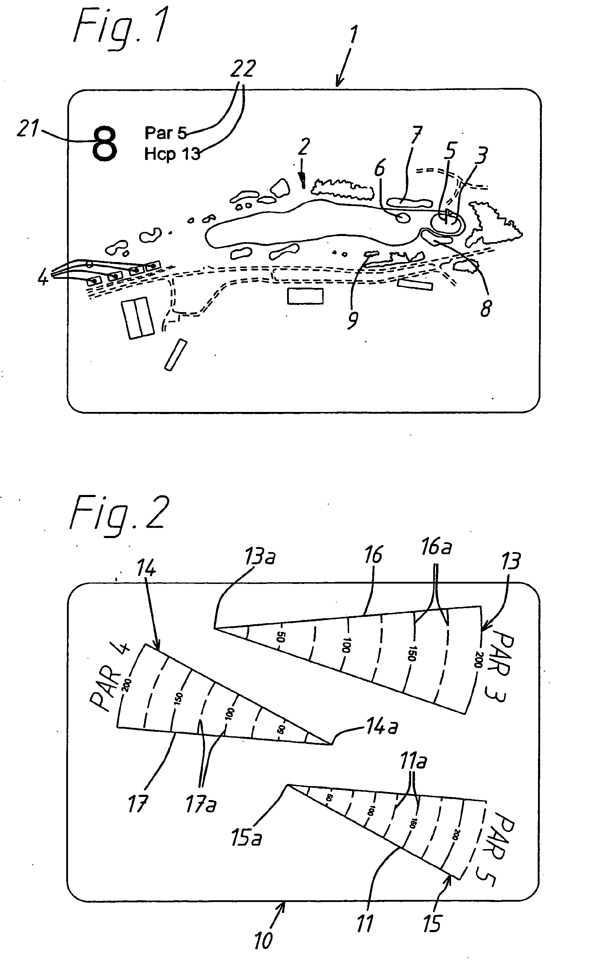

Fig.1 zeigt einen Informationsplan 1 einer Spielbahn 2 eines Golfplatzführers, die beispielsweise 505 Meter lang ist und für sogenanntes Par 5 vorgesehen ist. Der Informationsplan 1 bildet einen Teil eines erfindungsgemässen Golfplatzführers, der eine Anzahl von derartigen Informationsplänen einzelner Spielbahnen einer Golfanlage enthält (z.B. Pläne von mehreren Par 3, Par 4 und/oder Par 5 Spielbahnen) und in Form eines mehrseitigen Büchleins oder eines Ringheftes vorliegt. Die einzelnen Informationspläne können unterschiedliche Massstäbe aufweisen. Die Reproduktionsgrösse der einzelnen Informationspläne ist durch die Dimension der jeweiligen Spielbahn bestimmt, wobei das zur Verfügung stehende Format möglichst ausgenutzt wird, um einen möglichst hohen Detaillierungsgrad des Informationsplanes zu erreichen. Eine Spielbahn 2 mit einem festgelegten Par 3, 4 oder 5 umfasst jeweils den spielbaren Bereich vom Abschlag 4 bis in die Umgebung eines Green 3.

Die Informationspläne sind als die Situation massstabsgerecht wiedergebende Luftbilder, z.B. sogenannte Orthofotos, also hinsichtlich der Topografie entzerrte und somit masshaltige Abbildungen, insbesondere Luftbilder, ausgestaltet. Sie können allenfalls grafisch nachbearbeitet werden, z.B. zur besseren Erkennung von Spielbahn- und Greenrändern, Wasserhindernissen, Biotopen, Aus-Grenzen, Abschlägen, speziellen Platzsignalisationen etc. Des weiteren könnten sie auch als eine Kombination von Orthofotos mit überlagerten Vektordaten (so genannt hybride Plandarstellungen) ausgeführt sein. Auch die Orthofoto-Informationen können zur besseren Übersicht bzw. Lesbarkeit grafisch bearbeitet sein,

Zu diesen Orthofotos ist zu erwähnen, dass bei einer Luftbildaufnahme Verzerrungen durch die fotografische Zentralprojektion sowie Verzerrungen durch Höhenunterschiede des Geländes entstehen. Digitalaufnahmen oder gescannte analoge Luftbilder werden anhand von digitalen Geländemodellen neu berechnet (entzerrt). Durch das Zusammenfügen einzelner Orthofotos können grossflächige Orthofoto-Mosaike hergestellt werden. Orthofotos können entsprechend dem Anwendungszweck in verschiedenen Massstäben und Auflösungen erzeugt werden.

Aufgrund der naturgetreuen Wiedergabe einer Spielbahn 2 bieten Orthofotos im Vergleich zu herkömmlichen Karten eine viel höhere Informationsdichte, weil keine Informationen aufgrund kartographischer Generalisierung verloren gehen. Diese Informationsdichte ermöglicht dem Golfspieler, allein aufgrund optischer Anhaltspunkte auf dem Golfplatz eine genaue Positionsbestimmung durchzuführen und die Distanzen sowie die für die Spielstrategiefindung notwendigen Informationen schnell und genau zu ermitteln.

Die Orthofotos werden aus Luftaufnahmen in einer Distanz von vorzugsweise zwischen 50 und 1000 Metern hergestellt. Die Luftaufnahmen werden mittels einer Kombination verschiedener Sensoren, namentlich Digitalkamera, Laserscanner, Satellitenpositionierungssystem oder dergleichen, Inertialmesseinheit und/oder anderen Instrumenten ausgeführt.

Die bei den Luftaufnahmen entstehenden Verzerrungen durch die fotografische Zentralprojektion sowie Verzerrungen durch Höhenunterschiede des Geländes werden mittels der digital erfassten Geländemodelle beseitigt bzw. umgerechnet.

Aus Fig. 1 sind beispielsweise das Green 3 mit einer das Loch markierenden Fahne 5, verschiedene Abschläge 4 (z.B. für Profis, Herren und Frauen), Bunker 6, 7, 8 und viele andere individuelle Golfplatzmerkmale, wie beispielsweise Sträucher 9, massstabsgetreu ersichtlich, die als Orientierungshilfe bei der optischen Positionsbestimmung dienen. Bei den Informationsplänen könnte es sich allerdings auch um mit bekannten Vermessungsmethoden erstellte detaillierte Pläne oder um sogenannte hybride Pläne, d.h. um Pläne mit einer Kombination von Bilddaten mit überlagerten Vektordaten handeln, bei denen beispielsweise auf den Fotos nicht sichtbare Linien (z.B. Aus-Grenzen) oder einzelne Punkte ergänzt sind.

Des weiteren könnten auf einem jeweiligen Informationsplan zusätzliche Angaben, wie Geländeneigungen, Gefälle-Richtungen oder andere darauf nicht oder nur beschränkt sichtbare Besonderheiten enthalten sein. Als Beispiel sind Angaben 21, 22 der Bahn Nr. 8 mit einem Par 5 bei einem Handicap 13 enthalten.

Der Golfplatzführer enthält ferner erfindungsgemäss ein aus Fig. 2 ersichtliches Messhilfsmittel 10 mit jeweils einer dem Massstab des Informationsplanes 1 entsprechenden Distanzskala. Das Messhilfsmittel 10 ist als eine durchsichtige Kunststoffkarte, oder aus einem flexiblen Material bestehende transparente Folie ausgebildet, die mehrere Darstellungen enthält.

So sind beispielsweise auf der das Messhilfsmittel 10 bildenden Karte gemäss Fig. 2 drei von jeweils einem Nullpunkt 13a, 14a, 15a ausgehenden Kreissektore 13, 14, 15 mit zentrischen Distanzringausschnitten 16a, 17a, 11a dargestellt, die drei unterschiedliche Distanzskalen 16, 17, 11 bilden, welche für Par 3, Par 4 und Par 5 vorgesehen sind und den Massstäben der für Par 3, Par 4 und Par 5 vorgesehenen Informationsplänen entsprechen. Mit Vorteil können die einzelnen Distanzskalen 11, 16, 17 ein unterschiedliches Merkmal, z.B. mit Farben, aufweisen, welche mit einer andersartigen Erkennung bei den Par 3-, Par 4- und Par 5-Spielbahnplänen korrespondieren.

Das Format der Kunststoffkarte entspricht im wesentlichen demjenigen des Informationsplanes 1, der mit Vorteil ebenfalls als eine vorzugsweise flexible Kunststoffkarte ausgebildet ist. Es ist von Vorteil, wenn der als Büchlein oder Ringheft ausgebildete Golfplatzführer eine Art Zeigetasche oder eine andere Aufbewahrungs- oder Befestigungsmöglichkeit für das kartenförmige Messhilfsmittel 10 aufweist.

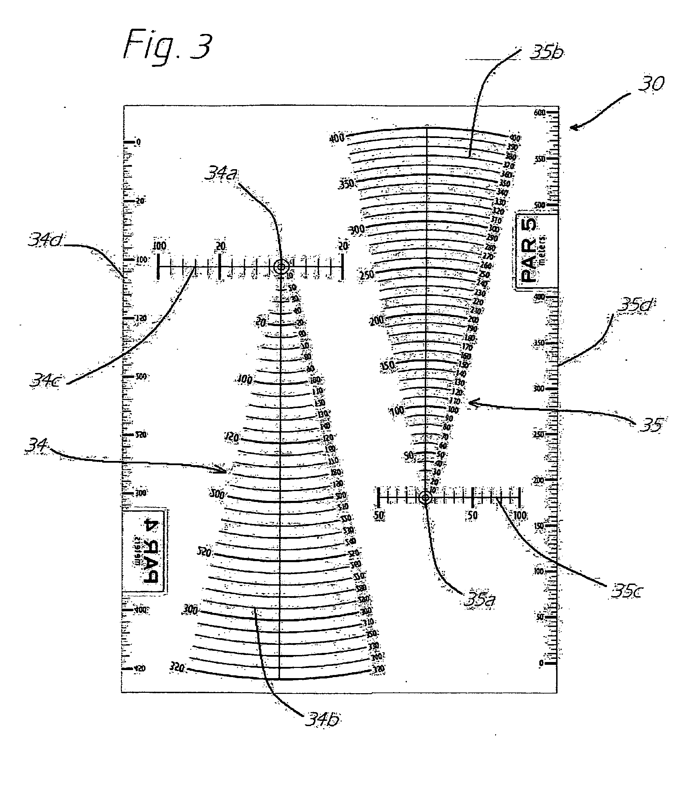

Bei dem durchsichtigen Messhilfsmittel 30 gemäss Fig. 3 ist die Skala für Par 3 gegenüber dem Messhilfsmittel 10 nach Fig. 2 weggelassen, da bei den Spielbahnen mit Par 3 eine solche Positionsbestimmung nicht so von Bedeutung ist. Es sind zwei von jeweils einem Nullpunkt 34a, 35a ausgehende Kreissektore 34, 35 mit zentrischen Distanzringausschnitten 34b, 35b dargestellt, welche für Par 4 und Par 5 vorgesehen sind und den Massstäben der für Par 4 bzw. Par 5 vorgesehenen Informationsplänen entsprechen, wobei die Kreissektoren zueinander spiegelverkehrt beschriftet sind, um Verwechslungen zu vermeiden. Beim vorliegenden Messhilfsmittel 30 sind zusätzlich bei den Nullpunkten 34a, 35a und bei den beiden Seitenrändern gerade Distanzskalen 34c, 34d bzw, 35c, 35d senkrecht zueinander ausgebildet, mit denen die Distanzen genau gemessen werden können.

Es ist vorgesehen, dass nur ein Messhilfsmittel mit mehreren, dem unterschiedlichen Massstab mehrerer Informationspläne entsprechenden Distanzskalen vorhanden ist, so dass die Distanzen aller Spielbahnen eines Golfplatzes mit nur einem Messhilfsmittel messbar sind.

Bei dieser optischen Positionierung kann der Spieler sehr schnell seine aktuelle Lage des Balles beim Abschlag 4 bzw. auf der Spielbahn 2 anhand von den auf dem Informationsplan 1 massstabgetreu veranschaulichten Golfplatzmerkmale, wie Bäume, Sträucher, Bunker, Häuser, Flüsse, Gewässer etc. bestimmen. Mit dem Messhilfsmittel 10 kann er dann auf einfachste Weise und auf einen Blick alle relevanten Distanzen, z.B. zum Green, zu den Hindernissen etc. genau messen und daraus die optimale Taktik für den nächsten Schlag bestimmen.

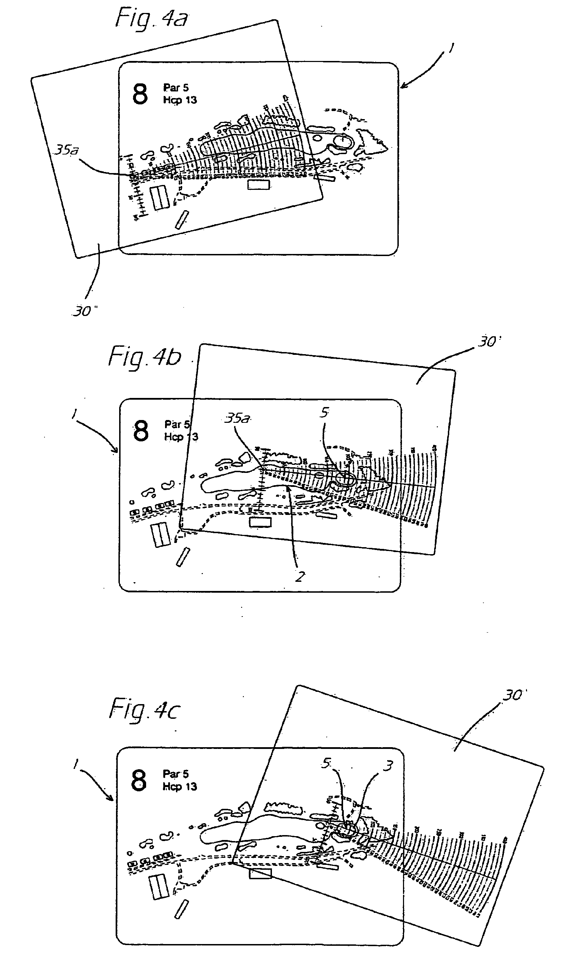

Fig. 4a bis Fig. 4c veranschaulichen die Verwendung des erfindungsgemässen Golfplatzführers anhand des Informationsplanes 1 nach Fig. 1 und des Messhilfsmittels 30 nach Fig. 3. Es sind drei verschiedene Positionen mit jeweils dem Informationsplan 1 und dem darauf gelegten durchsichtigen Messhilfsmittel 30' gezeigt, wobei von letzterem zur besseren Veranschaulichung nur gerade der Kreissektor 35 für Par 5 zu sehen ist. Der spiegelverkehrt erscheinende Kreissektor 34 ist weggelassen.

Bei Fig. 4a ist das Messhilfsmittel 30' mit seinem Nullpunkt 35a auf den Abschlag beim Informationsplan 1 gelegt. Der Spieler kann zum Beispiel daraus ableiten, welchen Golfschläger er benutzen will und wie weit allenfalls der Ball beim Abschlag geflogen ist.

Bei Fig. 4b liegt dann eine Ballposition auf der Spielbahn 2 wiederum beim Nullpunkt 35a des Messhilfsmittels 30' vor. Der Spieler kann daraus sehr schnell ersehen, wie weit die Distanz noch bis zur Fahne 5 und auch dazwischen beträgt, so dass er die Strategie festlegen kann, welchen Schläger er benutzen will und wie weit er mit diesem zu schlagen gedenkt.

Fig. 4c zeigt dann eine weitere Ballposition unweit vom Green 3 entfernt. Auch hier kann er die Distanz zum Green 3 bzw. zur Fahne 5 sehr genau ermitteln. Die senkrecht zum Kreissektor 35 vorhandene Distanzskala 35c hilft ihm als Fluchtlinie zusätzlich, die Position des Balls auf der Spielbahn genau zu bestimmen, weil er damit allenfalls neben der Spielbahn befindliche Objekte, wie zum Beispiel ein Baum, mit Hilfe dieser Fluchtlinie genau positionieren kann. Zudem können mit dieser Distanzskala 35c seitliche Abweichungen, beispielsweise wenn der Ball wegdriftet, gemessen werden. Durch diese erfindungsgemässen Orthofotos zusammen mit dem Messhilfsmittel 30 lässt sich dies eben äusserst genau festlegen, weil alle Details der Spielbahn massstabgetreu ersichtlich sind.

In einer besonders geeigneten Ausführungsform weisen die Informationspläne jeweils eine beschriftbare Oberfläche, vorzugsweise eine z.B. mit einem Bleistift beschreibbare Plastifizierung, auf. Dies ermöglicht das Einzeichnen der Position des gespielten Balles und damit auch die präzise Aufzeichnung (Kartierung) jedes einzelnen Schlages und somit des gesamten Spielverlaufes einer Golfrunde, und dies mit einfachsten Mitteln. Es können der Spielverlauf generell, die Schlaglängen, Flugdistanzen etc. erfasst und a posteriori analysiert werden. Der Spieler erhält eine Grulndlage zur statistischen Auswertung seiner Leistungen (z.B. Fehlerverteilung, prozentuale Anteile der Schläge, welche die Anforderungen erfüllten, etc.). Die mit Bleistift getätigten Eintragungen lassen sich restlos entfernen.

Die Informationspläne können im Rahmen der Erfindung jeweils auf einem Teil wenigstens ein Foto enthalten, welches insbesondere in Richtung des Greens 3 einer Spielbahn 2 aufgenommen ist. Es existieren vor allem bei hügeligen Spielbahnen Stellen, bei denen die Zielfahne bzw. das Green nicht sichtbar ist. Mit solchen Fotos besteht die Möglichkeit, dem Spieler neben der Information über die örtlichen Gegebenheiten einer von der Spielposition aus nicht oder nicht ausreichend einsehbaren Stelle des Platzes mittels Kennzeichnungen (auf dem Foto) Anhaltspunkte für die bessere Orientierung zu liefern, damit der Spieler annähernd weiss, in welche Richtung er den Ball schlagen muss.

Die Informationspläne können im Rahmen der Erfindung jeweils auf einem Teil eine Vergrösserung des Greens 3 mit Distanzangaben enthalten, damit dem Spieler diesbezüglich genaue Distanzwerte vorliegen.

Die mit dem Golfplatzführer ohne elektronische Hilfsmittel (z.B. GPS-Systeme) präzise festgehaltene gespielte Golfrunde kann nachträglich in einem Plan visualisiert werden. Es besteht somit auch die Möglichkeit der Herstellung eines einmaligen Souvenirs in Form eines persönlichen Platzübersichtsplanes (Name des Platzes, Anlass, Namen der Flightpartner, Datum, Darstellung der gespielten Runde, Ballpositionen, Flugbahnen, Linien etc.).

Die Informationspläne sind in einer bevorzugten Ausführungsvariante bleistiftbeschriftbar plastifiziert und somit wetterfest. Das vorzugsweise in Form einer transparenten Kunststoffkarte ausgebildete Messhilfsmittel ist ebenfalls wetterfest. Durch die Wetterfestigkeit bzw. Reinigungsfähigkeit bedingt, sind diese vorzugsweise als Büchlein gebundene Informationspläne wiederverwendbar und dadurch besteht mitunter auch die Möglichkeit des Leihens/Vermietens des Golfplatzführers. Vorteilhafterweise sind auch noch die allgemeinen Platz- bzw. Golfclubinformationen, eine Scorekarte, eine Tabelle zur systematischen Erfassung/Auflistung der Schlaglängen, eine Seite für individuelle Notizen sowie eine Seite mit Anleitungen und Tipps und gegebenenfalls weitere Informationen in dem Büchlein enthalten. Ferner könnten zusätzliche Informationen aufgenommen werden, wie gespielte Schläger, Kürzel der Spieler, Schlagnummer, Bemerkungen, etc. Alle Seiten sowie das Messhilfsmittel können auch mit Werbebotschaften versehen werden.

Der erfindungsgemässe Golfplatzführer ist sehr einfach (während des Spiels grossmehrheitlich einhändig) handhabbar und kostengünstig in seiner Herstellung. Es handelt sich um ein reines Druckerzeugnis, das vorteilhaft im Taschenformat hergestellt ist, mit einem darauf abgestimmten, einfachen Messhilfsmittel - es sind keine teuren und für das Gros der Golfspieler zu komplizierte elektronische Hilfsmittel notwendig.

Als zusätzliche Variante kann ein Golfplatzführer erfindungsgemäss derart ausgestaltet sein, dass die Orthofotos zu den Spielbahnen 2 bei verschiedenen Jahreszeiten vorliegen, um die je nach Jahreszeit naturgegebenen Veränderungen zu berücksichtigen. Insbesondere kann man dadurch Bäume, Sträucher etc. mit oder ohne Blätter optisch festhalten.

## Patentansprüche

1. Golfplatzführer mit massstabsgetreuen Informationsplänen der einzelnen Spielbahnen zur Orientierung über die Eigenheiten und Distanzen der jeweiligen Spielbahn (2), bei dem jeder Informationsplan (1) der jeweiligen, in einem Massstab dargestellten Spielbahn (2) detaillierte Golfplatzmerkmale aufzeigt, die zumindest als Orientierungshilfe zur optischen Positionsbestimmung dienen, um die für den Spieler relevanten Distanzen der Spielbahnen (2) ermitteln zu können, wobei ein Messhilfsmittel (10, 30) mit einer dem Massstab des Informationsplanes (1) entsprechenden Distanzskala (11, 16, 17, 34, 35) vorliegt, welches als eine durchsichtige Kunststoffkarte oder aus einem flexiblen Material bestehenden Folie ausgebildet ist, **dadurch gekennzeichnet, dass** die Informationspläne als Orthofotos der Spielbahnen (2) oder als eine Kombination von Orthofotos mit überlagerten Vektordaten mit oder ohne zusätzliche graphischen Bearbeitung ausgeführt sind, wobei nur ein Messhilfsmittel (10, 30) mit mehreren, dem unterschiedlichen Massstab der Informationspläne entsprechenden Distanzskalen vorhanden ist, wobei auf der transparenten Kunststoffkarte oder Folie zwei oder drei Kreissektore (13, 14, 15) mit zentrischen Distanzringausschnitten (16a, 17a, 11a) abgebildet sind, die zwei bzw. drei unterschiedliche Distanzskalen (16, 17, 11) bilden, die für Par 3, Par 4 oder Par 5 vorgesehen sind und den Massstäben der für Par 3, Par 4 oder Par 5 vorgesehenen Informationspläne entsprechen.

2. Golfplatzführer nach Anspruch 1, **dadurch gekennzeichnet, dass** die für die Informationspläne vorgesehenen Orthofotos als verzerrungsfreie natur- und massstabgetreue fotografische Abbildungen der Spielbahn (2) hergestellt sind.

3. Golfplatzführer nach Anspruch 1 oder 2, **dadurch gekennzeichnet, dass** das Messhilfsmittel (10, 30) mehrere, den unterschiedlichen Massstäben der Informationspläne entsprechende Distanzskalen (11, 16, 17, 34, 35) aufweist.

4. Golfplatzführer nach Anspruch 1 oder 2, **dadurch gekennzeichnet, dass** der Informationsplan (1) jeweils als hybrider Plan ausgestaltet ist, bei dem das oder die Orthofotos mit Vektordaten kombiniert bzw. überlagert sind, um beispielsweise auf den Fotos nicht sichtbare Linien oder einzelne Punkte zur ergänzen.

5. Golfplatzführer nach einem der Ansprüche 1 bis 4, **dadurch gekennzeichnet, dass** die Informationspläne jeweils eine beschriftbare Oberfläche, vorzugsweise mit einer eine matte Oberfläche aufweisenden Plastifizierung, aufweisen, um verschiedene Informationen festzuhalten, beispielsweise die Position des gespielten Golfballes bzw. das Aufzeichnen des gesamten Spielverlaufes.

6. Golfplatzführer nach Anspruch 4 oder 5, **dadurch gekennzeichnet, dass** die Informationspläne zu einem Büchlein oder Ringbuch zusammengefasst sind, wobei das Büchlein oder Ringbuch bzw. die Informationspläne eine Aufbewahrung- oder Befestigungsmöglichkeit, vorzugsweise eine Lasche, Zeigetasche, einen Clip, einen Schlitz oder ähnliches für das Messhilfsmittel (10) enthält.

7. Golfplatzführer nach einem der Ansprüche 1 bis 6, **dadurch gekennzeichnet, dass** die Informationspläne jeweils auf einem Teil wenigstens ein Foto enthalten, welches Informationen zu einem Ausschnitt der jeweiligen Spielbahn vermittelt.

8. Golfplatzführer nach Anspruch 7, **dadurch gekennzeichnet, dass** wenigstens ein Foto insbesondere in Richtung des Greens (3) einer Spielbahn (2) aufgenommen ist, von Stellen aus bei der Spielbahn, bei der die Zielfahne (5) nicht sichtbar ist, wobei das Foto mit einer oder mehreren Kennzeichnungen versehen ist, mittels welchem einem Spieler eine Orientierungshilfe vermittelt ist.

9. Golfplatzführer nach einem der Ansprüche 1 bis 8, **dadurch gekennzeichnet, dass** auf einem jeweiligen Informationsplan zusätzliche Angaben, wie Geländeneigungen, Gefällsrichtungen oder andere darauf nicht oder nur beschränkt sichtbare Besonderheiten enthalten sind.

## Claims

1. Golf course guide with true to scale information maps of the individual holes for orientation about the quirks and distances of the respective hole (2), wherein each information map (1) of the respective in a scale shown hole (2) indicates detailed golf course features, which serve at least as an orientation aid for visual position determination, in order to be able to determine the distances of the holes (2) relevant for the player, whereby a measurement aid means (10, 30) with a distance scale (11, 16, 17, 34, 35) is available, which corresponds to the scale of the information map (1), being designed as a transparent plastic card or as sheet made of a flexible material, **characterised in that**,
the information maps being designed as orthophotos of the holes (2) or as a combination of orthophotos with overlaid vector data with or without additional graphic processing, wherein only one measurement aid means (10, 30) with a number of distance scales corresponding to the different scale of the information maps is available, wherein on the transparent plastic card or foil are displayed two or three circular sectors (13, 14, 15) with centric distance ring cutouts (16a, 17a, 11a), which forming two respectively three different distance scales (16, 17, 11), which are provided for par 3, par 4 or par 5 and comply with the scales of the information maps for par 3, par 4 or par 5.

2. Golf course guide according to Claim 1, **characterised in that** the orthophotos provided for the information maps are produced as distortion-free photographic images of the hole (2) true to nature and true to scale.

3. Golf course guide according to Claim 1 or 2, **characterised in that** the measurement aid means (10, 30) has a number of distance scales (11, 16, 17, 34, 35) corresponding to the different scales of the information maps.

4. Golf course guide according to Claim 1 or 2, **characterised in that** the information map (1) is respectively in the form of a hybrid map, wherein the orthophoto or orthophotos are combined or overlaid with vector data so as for example to add non-visible lines or individual points to the photos.

5. Golf course guide according to any of the Claims 1 to 4, **characterised in that** the information maps respectively have a surface that can be marked, preferably with a plasticisation having a matt surface, in order to record different information, for example the position of the golf ball played respectively recording of the whole run of game.

6. Golf course guide according to Claim 4 or 5, **characterised in that** the information maps are combined to form a booklet or a ring binder, whereby the booklet or ring binder respectively the information maps including a possibility for safe-guarding or attaching, preferably a strap, transparent pocket, a clip, a slot or similar for the measurement aid means (10).

7. Golf course guide according to any of the Claims 1 to 6, **characterised in that** the information maps include respectively on one part at least one photo, which conveys information regarding one section of the respective hole.

8. Golf course guide according to Claim 7, **characterised in that** at least one photo is incorporated, in particular in the direction of the green (3) of a hole (2), of positions of the hole from where the target flag (5) can not be seen, whereby the photo being provided with one or more markers by means of which a player is provided with an orientation aid.

9. Golf course guide according to any of the Claims 1 to 8, **characterised in that** additional details such as terrain suitabilities, incline directions or other features not visible or only visible to a limited extent are included on the respective information map.

## Revendications

1. Guide de parcours de golf comportant des plans d'information mis à l'échelle des trous individuels pour une orientation par rapport aux particularités et aux distances du trou (2) respectif, dans lequel chaque plan (1) d'information du trou (2) respectif représenté à une échelle indique des caractéristiques du parcours de golf détaillées, qui servent au moins en tant qu'aide à l'orientation pour la détermination optique de position, afin de permettre au joueur de déterminer les distances pertinentes des trous (2), dans lequel un moyen (10, 30) d'aide à la mesure comportant une échelle (11, 16, 17, 34, 35) de distance correspondant à l'échelle du plan (1) d'information est prévu, le moyen d'aide à la mesure étant réalisé sous la forme d'une carte en matière plastique transparente ou en une feuille constituée d'un matériau souple, **caractérisé en ce que**
les plans d'information sont réalisés sous la forme d'orthophotographies des trous (2) ou en tant qu'une combinaison d'orthophotographies avec des données de vecteurs superposées avec ou sans traitement graphique supplémentaire, dans lequel seul un moyen (10, 30) de mesure comportant plusieurs échelles de distance correspondant aux différentes échelles de distance du plan d'information est prévu, dans lequel deux ou trois secteurs (13, 14, 15) circulaires comportant des sections (16a, 17a, 11a) annulaires de distance centrées sont formées, qui forment deux ou trois échelles (16a, 17a, 11a) de distances différentes, qui sont prévues pour les pars 3, les pars 4 ou les pars 5 et qui correspondent aux échelles des plans d'information prévues pour les pars 3, pars 4 ou pars 5.

2. Guide de parcours de golf suivant la revendication 1, **caractérisé en ce que** les orthophotographies prévues pour les plans d'information sont réalisées sous la forme d'images photographiques mises à l'échelle et naturelles sans distorsion du trou (2).

3. Guide de parcours de golf suivant la revendication 1 ou 2, **caractérisé en ce que** le moyen (10, 30) d'aide à la mesure comporte plusieurs échelles (11, 16, 17, 34, 35) de distance correspondantes aux différentes échelles des plans d'information.

4. Guide de parcours de golf suivant la revendication 1 ou 2, **caractérisé en ce que** le plan (1) d'information est réalisé sous la forme d'un plan hybride, dans lequel des données de vecteurs sont combinées aux orthophotographies ou sont superposées sur les orthophotographies, afin par exemple de compléter sur les photographies des points individuels ou des lignes non visibles.

5. Guide de parcours de golf suivant l'une des revendications 1 à 4, **caractérisé en ce que** les plans d'information comportent chacun une surface qui peut être marquée, de préférence avec une plastification ayant une surface mate, afin de déterminer différentes informations, par exemple la position de la balle de golf jouée ou l'enregistrement de l'ensemble des coups joués.

6. Guide de parcours de golf suivant la revendication 4 ou 5, **caractérisé en ce que** les plans d'information sont assemblés en une brochure ou un cahier à spirale, dans lequel la brochure ou le cahier à spirale et les plans d'information comportent une possibilité de fixation ou de garde, de préférence une languette, une chemise transparente, un clip, une fente ou analogue pour le moyen (10) d'aide à la mesure.

7. Guide de parcours de golf suivant l'une des revendications 1 à 6, **caractérisé en ce que** les plans d'information comportent respectivement sur une partie au moins une photographie, qui fournit des informations correspondant à un tronçon du trou respectif.

8. Guide de parcours de golf suivant la revendication 7, **caractérisé en ce qu'**au moins une photographie est munie, notamment dans la direction du green (3) d'un trou (2), de points du trou desquels le drapeau (5) n'est pas visible, la photographie étant munie d'un ou plusieurs marqueurs au moyen desquels il est fourni au joueur une aide à l'orientation.

9. Guide de parcours de golf suivant l'une des revendications 1 à 8, **caractérisé en ce que** des détails supplémentaires tels que des inclinaisons du terrain, des directions d'obstacles ou d'autres particularités non visibles ou visibles uniquement de manière limitée sont incluses sur le plan d'information respectif.
